# EUROPÄISCHE PATENTSCHRIFT

(11) **EP 0 423 485 B1**
(45) Veröffentlichungstag und Bekanntmachung des Hinweises auf die Patenterteilung: **26.07.1995**
(21) Anmeldenummer: 90117610.7
(22) Anmeldetag: 13.09.1990
(51) Int. Cl.: H04L 12/26, H04L 1/24, H04L 1/16, H04L 5/14, H04M 3/26

(54) **Verfahren und Einrichtung zur bidirektionalen Übertragung von Daten**
Method and device for bidirectional transmission of data
Procédé et dispositif de transmission bidirectionnelle de données

(30) Priorität: 05.10.1989 DE 3933262
(43) Veröffentlichungstag der Anmeldung: 24.04.1991
(73) Patentinhaber: ROBERT BOSCH GMBH, 70442 Stuttgart (DE)
(72) Erfinder: Schmidt, Hauke, D-3200 Hildesheim (DE)
(74) Vertreter: Friedmann, Jürgen, Dr.-Ing.

(56) Entgegenhaltungen:
- EP-A- 0 039 191
- EP-A- 0 179 465
- EP-A- 0 286 295
- AT-B- 315 252
- DE-A- 2 159 675
- DE-A- 2 838 816
- US-A- 4 351 059

## Beschreibung

### Stand der Technik

Die Erfindung geht aus von einem Verfahren nach der Gattung des Hauptanspruchs.

Zur Übertragung von Daten mit einem möglichst geringen Redundanzanteil bei vorgegebener Fehlerrate ist es erforderlich, den anzuwendenden Code den Eigenschaften des Kanals anzupassen (Kanalcodierung). Insbesondere bei der drahtlosen Übertragung können die Eigenschaften eines Kanals jedoch stark veränderlich sein, so daß ein einmal gewählter Code zeitweise ungünstig sein kann.

Es ist schon ein Verfahren aus der Druckschrift EP-A 0 039 191 bekannt, bei dem die Übertragungsrate für einen Hin- und Rückkanal bei einer Datenübertragung an die Übertragungseigenschaften der Kanäle angepaßt wird. Dabei werden für beide Übertragungsrichtungen die Bitfehlerraten, die bei der Übertragung einer bekannten Testsequenz entstehen, gemessen und in Abhängigkeit der Bitfehlerrate eine Anpassung der Datenübertragungsrate durchgeführt.

Weiterhin ist aus der Druckschrift EP-A-0 286 295 ein Verfahren bekannt, das zu Beginn einer Übertragung die Qualität einer Übertragungsstrecke überprüft und entscheidet, ob eine Übertragung stattfinden kann oder nicht. Zur Beurteilung der Kanaleigenschaften wird geprüft, ob eine übertragene Testsequenz Bitfehler enthält. Eine Anpassung des Übertragungsverfahrens an die Kanaleigenschaften findet nicht statt.

Aufgabe der vorliegenden Erfindung ist es, eine Übertragung mit möglichst geringem Redundanzanteil bei vorgegebener Fehlerrate auch bei Übertragungskanälen zu ermöglichen, deren Eigenschaften veränderlich sind.

Das erfindungsgemäße Verfahren mit den kennzeichnenden Merkmalen des unabhängigen Anspruchs 1 und die erfindungsgemäße Vorrichtung mit den Merkmalen des unabhängigen Anspruchs 4 hat den Vorteil, daß in Abhängigkeit von den jeweils vorliegenden Eigenschäften des Übertragungskanals ein an diese Eigenschaften angepaßter Code zur Übertragung gewählt wird. Dabei können bei Vorliegen verschiedener Übertragungseigenschaften des Hin- und Rückkanals auch verschiedene Codes gewählt werden.

Auf diese Weise wird erreicht, daß auch bei veränderlichen Eigenschaften des Übertragungskanals ein optimaler Code zur codierten Übertragung der Daten verwendet wird.

Durch die in den weiteren Ansprüchen aufgeführten Maßnahmen sind vorteilhafte Weiterbildungen und Verbesserungen der im Hauptanspruch angegebenen Erfindung und vorteilhafte Einrichtungen zur bidirektionalen Übertragung von Daten möglich.

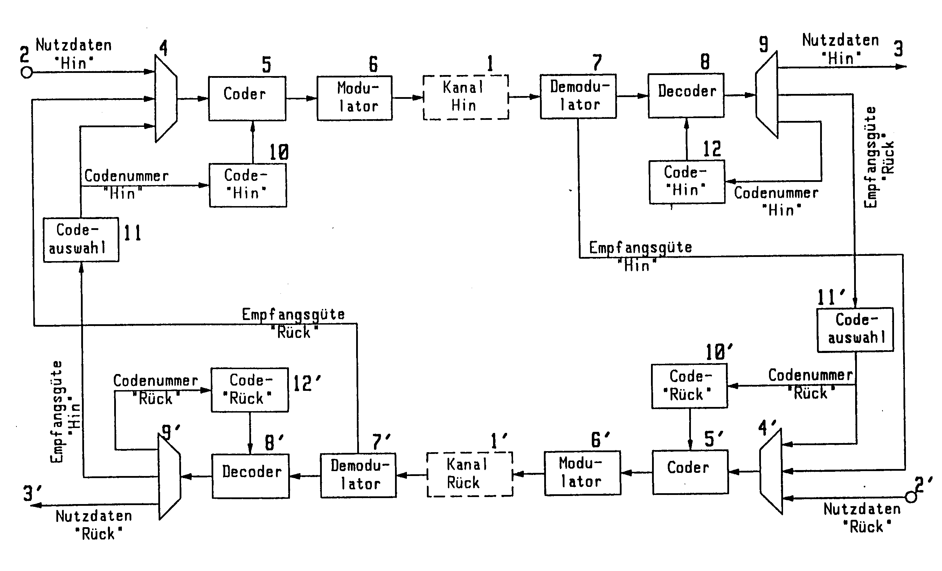

Ein Ausführungsbeispiel-der Erfindung ist in der Zeichnung als Blockschaltbild dargestellt und in der nachfolgenden Beschreibung näher erläutert.

Bei dem in der Zeichnung dargestellten Ausführungsbeispiel sind die Übertragungskanäle 1, 1′ zur Unterscheidung als Hin- und Rückkanal bezeichnet, obwohl bei vielen Anwendungsfällen beide Richtungen völlig gleichartig sind. Die zu übertragenden Daten - im folgenden als Nutzdaten bezeichnet - werden jeweils einem Eingang 2, 2′ und einem nicht dargestellten Endgerät, beispielsweise einem Fernsehtelefon zugeführt und können von je einem Ausgang 3, 3′ nach der Übertragung abgenommen werden. Vom Eingang werden Nutzdaten über einen Multiplexer 4, 4′, einen Coder 5, 5′ und einen Modulator 6, 6′ dem Übertragungskanal 1, 1′ zugeführt.

Empfängerseitig gelangen die übertragenen Nutzdaten über einen Demodulator 7, 7′, einen Decoder 8, 8′ und einen Demultiplexer 9, 9′ zum Ausgang 3, 3′. Der Coder 5, 5′ kann die übertragenden Daten mit verschiedenen Codes versehen, die in einem Speicher 10, 10′ gespeichert sind. Der jeweils zu verwendende Code wird von einer Codeauswahlschaltung 11, 11′ jeweils abgerufen. Die dabei verwendete Codenummer wird außer dem Speicher 10, 10′ auch dem Multiplexer 4, 4′ zugeführt und somit zusammen mit den Nutzdaten über den Kanal 1, 1′ übertragen.

Die übertragene Codenummer wird durch den Demultiplexer 9, 9′ von den übertragenen Daten abgetrennt und steuert mit Hilfe eines weiteren Speichers 12, 12′ den Decoder 8, 8′ derart, daß der gleiche Code wie beim Codieren auch zum Decodieren verwendet wird. Die senderseitigen Einrichtungen 4, 5, 6; 4′, 5′, 6′ und die empfängerseitigen Einrichtungen 7, 8, 9; 7′, 8′, 9′ sind ferner zur Übertragung von Daten eingerichtet, welche die Empfangsgüte des jeweils anderen Kanals kennzeichnen. Zur Ableitung dieser Daten ist der Demodulator 7, 7′ besonders ausgestaltet.

Die Ermittlung eines Wertes für die Empfangsgüte aus dem empfangenen Signal ist auf vielerlei Weisen möglich. So kann beispielsweise die Empfangsgüte aus dem bei der Demodulation gemessenen Verhältnis von Signal- zu Rauschleistung (SNR) gewonnen werden. Aufgrund einer zuvor festgelegten Wertebereichseinteilung wird als Empfangsgüte die Nummer des Bereichs übertragen, in dem der Meßwert SNR liegt.

Die Empfangsgüte kann auch bestimmt werden, indem der Sender in regelmäßigen Abständen eine dem Empfänger bekannte Bitfolge (uncodiert) überträgt (Trainingssequenz) und der Empfänger die entstandenen Bitfehler zählt. Die ermittelte Zahl von Bitfehlern pro Trainingssequenz wird aufgrund einer bekannten Einteilung einem Wert für die Empfangsgüte zugeordnet.

In komplizierteren Demodulatorstrukturen sind eine Vielzahl von weiteren Methoden zur Ermittlung einer Empfangsgüte möglich. Als Beispiel sei hier ein Demodulator mit Viterbi-Entzerrer erwähnt, in dem die Kanalimpulsantwort bei der Demodulation berücksichtigt wird. Hier kann die bei der Viterbi-Entzerrung gebildete Distanzsumme zur Festlegung der Empfangsgüte herangezogen werden.

## Patentansprüche

1. Verfahren zur bidirektionalen Übertragung von Daten, wobei jeweils ein Kanal (1, 1′) für jede Richtung vorgesehen ist und die Empfangsgüte der in einer ersten Richtung (1) übertragenen Daten gemessen und der Meßwert über den jeweils in Gegenrichtung verlaufenden Kanal (1′) übertragen wird, dadurch gekennzeichnet, daß in Abhängigkeit von der Größe des Meßwerts der Empfangsgüte in der Sendestelle (10) ein Code zur Übertragung der Daten ausgewählt wird und die Codenummer zusammen mit den Nutzdaten in der ersten Richtung (1) übertragen wird und daß die Codenummer im Empfänger (9) von den Nutzdaten getrennt den Decoder derart steuert, daß beim Decodieren derselbe Code wie beim Codieren verwendet wird.

2. Verfahren nach Anspruch 2, dadurch gekennzeichnet, daß über jeweils einen Kanal (1) die zu übertragenden Daten, Daten zur Kennzeichnung des Codes und Daten zur Kennzeichnung der Empfangsgüte des Gegenkanals (1) übertragen werden.

3. Verfahren nach Anspruch 1, dadurch gekennzeichnet, daß mehrere Codes gespeichert sind, von denen in Abhängigkeit von der Empfangsgüte ein Code ausgewählt wird.

4. Einrichtung zur bidirektionalen Übertragung von Daten, wobei jeweils in eine Richtung ein Kanal (1, 1′) vorgesehen ist, welchem die zu übertragenden Daten über einen Coder (5, 5′) und einen Modulator (6, 6′) zugeführt werden und von dem die übertragenen Daten über einen Demodulator (7, 7′) und einen Decoder (8, 8′) abgenommen werden, wobei der Coder (5, 5′) und der Decoder (8, 8′) für verschiedene vorgegebene Codes eingerichtet sind, dadurch gekennzeichnet, daß empfängerseitig eine Einrichtung (7, 7′) zur Bestimmung der Empfangsgüte vorgesehen ist, deren Ausgangsdaten über einen Gegenkanal (1, 1′) übertragbar und einer Codeauswahlschaltung (11, 11′) zuführbar sind, welche in Abhängigkeit von der Empfangsgüte einen von den vorgegebenen Codes für den Coder (5, 5′) auswählt und Daten betreffend der Codeauswahl zur Übertragung über den Kanal (1, 1′) abgibt, daß empfängerseitig ein Demultiplexer (9, 9′) die Daten betreffend der Codeauswahl von den übertragenen Daten abtrennt und den Decoder (8, 8′) derart steuert, daß beim Decodieren derselbe Code wie beim Codieren verwendet wird.

5. Einrichtung nach Anspruch 4, dadurch gekennzeichnet, daß die Einrichtung zur Bestimmung der Empfangsgüte von dem Demodulator (7, 7′) gebildet ist.

6. Einrichtung nach Anspruch 4, gekennzeichnet durch die Verwendung für eine Bildtelefoneinrichtung.

7. Verfahren nach Anspruch 1, dadurch gekennzeichnet, daß das Verhältnis von Signal- zu Rauschleistung der empfangenen Signale gemessen und einem von mehreren vorgegebenen Wertebereichen zugeordnet wird und daß eine Kennzeichnung des jeweiligen Wertebereichs als Empfangsgüte übertragen wird.

8. Verfahren nach Anspruch 1, dadurch gekennzeichnet, daß eine dem Empfänger (8) bekannte Bitfolge wiederholt übertragen wird, daß bei der Übertragung entstehende Bitfehler gezählt werden und daß die Zahl der Bitfehler oder ein Wertebereich, in den die Zahl der Bitfehler fällt, als Empfangsgüte übertragen wird.

9. Verfahren nach Anspruch 1, dadurch gekennzeichnet, daß ein Demodulator (9, 9′) mit Viteri-Entzerrer verwendet wird, in dem eine Kanalimpulsantwort bei der Demodulation berücksichtigt wird, und daß die bei der Viberti-Entzerrung gebildete Distanzsumme zur Festlegung der Empfangsgüte herangezogen wird.

## Claims

1. Method for bidirectional transmission of data, one channel (1, 1′) in each case being provided for each direction and the reception quality of the data transmitted in a first direction (1) being measured and the measured value being transmitted via the channel (1′) which respectively runs in the opposite direction, characterized in that a code for transmission of the data is selected in the transmission point (10) as a function of the magnitude of the measured value of the reception quality, and the code number is transmitted together with the useful data in the first direction (1), and in that the code number in the receiver (9) controls the decoder separately from the useful data in such a manner that the same code is used during decoding as during coding.

2. Method according to Claim 1, characterized in that the data to be transmitted, data to designate the code and data to designate the reception quality of the opposite channel (1) are transmitted via in each case one channel (1).

3. Method according to Claim 1, characterized in that a plurality of codes are stored, from which one code is selected as a function of the reception quality.

4. Device for bidirectional transmission of data, one channel (1, 1′) being provided in each case in one direction, to which channel (1, 1′) the data to be transmitted are supplied via a coder (5, 5′) and a modulator (6, 6′) and from which the transmitted data are removed via a demodulator (7, 7′) and a decoder (8, 8′), the coder (5, 5′) and the decoder (8, 8′) being set up for different predetermined codes, characterized in that a device (7, 7′) is provided at the receiver end in order to determine the reception quality, the output data of which device (7, 7′) can be transmitted via an opposite channel (1, 1′) and can be supplied to a code selection circuit (11, 11′) which selects one of the predetermined codes for the coder (5, 5′) as a function of the reception quality and emits data relating to the code selection for transmission via the channel (1, 1′), in that a demultiplexer (9, 9′) at the receiver end separates the data relating to the code selection from the transmitted data and controls the decoder (8, 8′) in such a manner that the same code is used during decoding as during coding.

5. Device according to Claim 4, characterized in that the device for determining the reception quality is formed by the demodulator (7, 7′).

6. Device according to Claim 4, characterized by use for a video-telephone device.

7. Method according to Claim 1, characterized in that the ratio of the signal power to the noise power of the received signals is measured and is assigned to one of a plurality of predetermined value ranges, and in that a designation of the respective value range is transmitted as the reception quality.

8. Method according to Claim 1, characterized in that a bit sequence which is known to the receiver (8) is transmitted repeatedly, in that bit errors which occur during the transmission are counted, and in that the number of bit errors or a value range in which the number of bit errors occurs is transmitted as the reception quality.

9. Method according to Claim 1, characterized in that a demodulator (9, 9′) having a Viterbi equalizer is used in which a channel pulse response is taken into account during the demodulation, and in that the distance sum formed during the Viterbi equalization is used to define the reception quality.

## Revendications

1. Procédé de transmission bidirectionnelle de données, avec un canal (1, 1′) pour chaque direction et selon lequel on mesure la qualité de la réception des données transmises dans une première direction (1) et la valeur de la mesure est transmise par le canal (1′) dirigé chaque fois en sens opposé, caractérisé en ce qu'en fonction de la grandeur de la valeur de mesure de la qualité de réception on choisit, dans la partie d'émission (10), un code pour transmettre les données et on transmet ce numéro de code ainsi que les données utiles dans la première direction (1) et ce numéro de code commande le décodeur après avoir été séparé des données utiles dans le récepteur (9), pour qu'au décodage on utilise le même code qu'au moment du codage.

2. Procédé selon la revendication 1, caractérisé en ce que par chaque canal (1) on transmet les données à transmettre, les données caractérisant le code et les données caractérisant la qualité de réception du contre-canal (1).

3. Procédé selon la revendication 1, caractérisé en ce qu'on enregistre plusieurs codes dont on choisit un code en fonction de la qualité de réception.

4. Installation de transmission bidirectionnelle de données, avec chaque fois un canal (1, 1′) dans une direction qui reçoit les données à transmettre par un codeur (5, 5′) et un modulateur (6, 6′) et dans lequel les données transmises sont prises sur un démodulateur (7, 7′) et un décodeur (8, 8′), le décodeur (5, 5′) et le décodeur (8, 8′) étant conçus pour différents codes prédéterminés, installation caractérisée en ce que du côté de la réception il y a une installation (7, 7′) pour déterminer la qualité de la réception, installation dont les données de sortie sont transmises par un contre-canal (1, 1′) et alimentent un circuit de sélection de codes (11, 11′) qui, en fonction de la qualité de réception, sélectionne l'un des codes prédéterminés pour le codeur (5, 5′) et émet les données concernant la sélection de codes pour être contrôlés par le canal (1, 1′), et du côté de la réception il y a un démultiplexeur (9, 9′) qui commande les données pour le choix du code en les séparant des données transmises et commande le décodeur (8, 8′) pour utiliser au décodage le même code que celui ayant servi au codage.

5. Installation selon la revendication 4, caractérisée en ce qu'elle est réalisée par le démodulateur (7, 7′) pour déterminer la qualité de la réception.

6. Installation selon la revendication 4, caractérisée par l'utilisation d'une installation de téléphone vidéo.

7. Procédé selon la revendication 1, caractérisé en ce que le rapport entre la puissance du signal et la puissance du bruit dans le signal reçu est mesuré et est associé à l'une de plusieurs plages de valeurs prédéterminées et en ce qu'on transmet la caractéristique de la plage de valeurs de mesures respectives comme qualité de réception.

8. Procédé selon la revendication 1, caractérisé en ce qu'on transmet de manière répétée une succession de bits connus du récepteur (8) et à la transmission on compte les erreurs de bits et le nombre d'erreurs de bits ou une plage de valeurs dans laquelle tombe le nombre des erreurs de bits est transmis comme qualité de réception.

9. Procédé selon la revendication 1, caractérisé en ce qu'on utilise un démodulateur (9, 9′) avec un correcteur Viterbi et dans une réponse impulsionnelle du canal on en tient compte à la démodulation et en ce que la somme de distance formée par le correcteur Viterbi est utilisée pour déterminer la qualité de réception.
